# EUROPÄISCHE PATENTSCHRIFT

(11) **EP 2 706 248 B1**
(45) Veröffentlichungstag und Bekanntmachung des Hinweises auf die Patenterteilung: **23.12.2015**
(21) Anmeldenummer: 13182965.7
(22) Anmeldetag: 04.09.2013
(51) Int. Cl.: F16C 29/00, F16C 29/06

(54) **Linearführung**
Linear guide
Guidage linéaire

(30) Priorität: 06.09.2012 DE 102012215783
(43) Veröffentlichungstag der Anmeldung: 12.03.2014
(73) Patentinhaber: Aktiebolaget SKF, 415 50 Göteborg (SE)
(72) Erfinder: Andersson, Leif, 97711 Maßbach (DE); Drügemöller, Andreas, 97456 Dittelbrunn (DE); Warsch, Thorsten, 97247 Untereisenheim (DE)
(74) Vertreter: Schonecke, Mitja

(56) Entgegenhaltungen:
- DE-A1- 3 625 193
- JP-A- 2010 164 170

## Beschreibung

Die Erfindung betrifft eine Linearführung, umfassend mindestens eine Profilschienenführung, wobei die Profilschienenführung eine Führungsschiene aufweist, die auf einem Trägerelement befestigt ist, und wobei die Profilschienenführung Führungswägen aufweist, die mit einem in eine translatorische Richtung relativ zum Trägerelement verschiebbaren Tischelement verbunden sind, wobei der mindestens einen Profilschienenführung mindestens drei Führungswägen zugeordnet sind, wobei die Linearführung so ausgebildet ist, dass mindestens einer der Führungswägen über ein axiales Ende der Führungsschiene hinaus in translatorische Richtung verfahren werden kann.

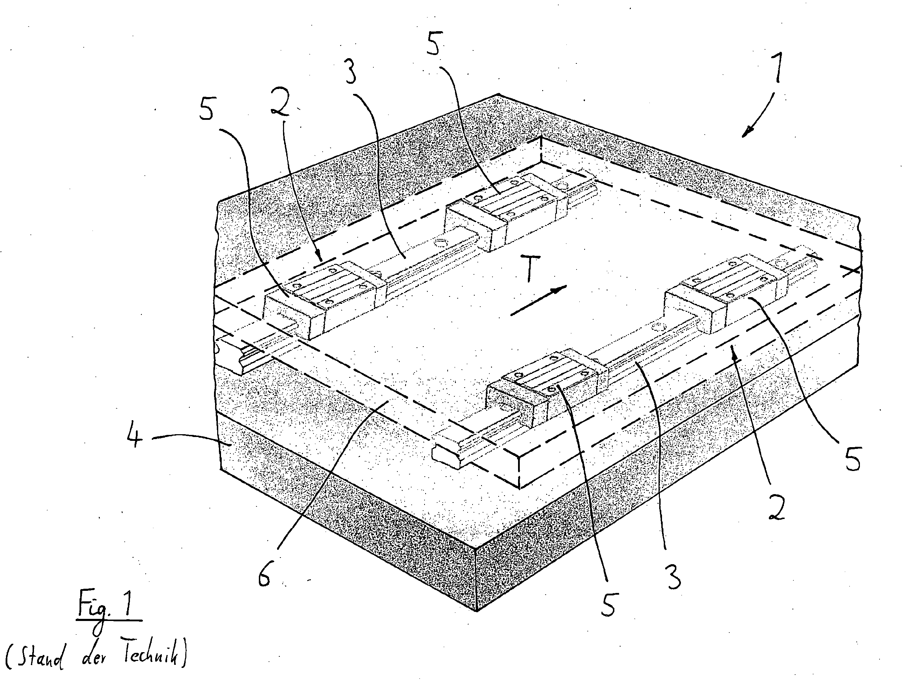

Eine gattungsgemäße Linearführung ist aus der DE 36 25 193 A1 bekannt. Eine solche Profilschienenführung besteht hinsichtlich ihrer Hauptkomponenten aus mindestens einem Führungswagen und einer Führungsschiene. Häufig werden dabei Profilschienenführungen so gestaltet, dass ein oder mehrere Führungswagen auf einer Führungsschiene oder auch auf mehreren Führungsschienen montiert werden. Dies ist in Fig. 1 illustriert.

Die Profilschienenführungen 2 der hier dargestellten Linearführung 1 umfassen jeweils eine Führungsschiene 3, auf der im dargestellten Falle zwei Führungswägen 5 angeordnet sind. Die Führungsschiene 3 ist auf einem Trägerelement 4 befestigt.

Die Führungswägen sind mit einem Tischelement 6 verschraubt, so dass das Tischelement 6 relativ zum Trägerelement 4 in eine translatorische Richtung T verschiebbar angeordnet ist.

Der mögliche Bewegungshub in translatorische Richtung ergibt sich generell aus der Länge der Führungsschiene abzüglich der Länge des Wagens. Durch die für einen ordnungsgemäßen Betrieb erforderliche Koppelung von Führungswagen und Führungsschiene ist folglich der translatorische Hub der Lageranordnung definiert und limitiert.

Durch die Montage zusätzlicher Führungswägen auf einer Führungsschiene - wie im Ausführungsbeispiel nach Fig. 1 gezeigt - können größere Lasten aufgenommen werden. Gleichzeitig reduziert sich jedoch der Hub, da stets alle Führungswägen auf der Führungsschiene bleiben.

Zum Einsatz können Linearführungen mit Kugel- bzw. Rollenprofilschienen oder Präzisionsschienen kommen.

An die vorbekannte Lageranordnung müssen relativ hohe Anforderungen an die Präzision der Bauteile gestellt werden, was entsprechend hohe Herstellungskosten bedingt. Die Montage ist aufwendig, die geschultes Personal erfordert.

Die JP 2010 164 170 A offenbart ein Stopper-Element für eine Linearführung.

Der Erfindung liegt die **Aufgabe** zugrunde, eine gattungsgemäße Linearführung so auszugestalten, dass bei gegebener hoher Tragfähigkeit einen größerer Verschiebeweg ermöglicht wird.

Die **Lösung** dieser Aufgabe durch die Erfindung ist dadurch gekennzeichnet, dass Anschlagsmittel an dem Tischelement oder an mindestens einem der Führungswägen und/oder am Trägerelement angeordnet sind, die die Verschiebung des Tischelements relativ zum Trägerelement in translatorische Richtung begrenzen, wobei die Anschlagsmittel so angeordnet und/oder ausgebildet sind, dass sie für mindestens einen der Führungswägen bezüglich der Führungsschiene keine Begrenzung der Verfahrbarkeit in translatorische Richtung darstellen.

Bevorzugt ist in beiden axialen Endbereichen des Tischelements je mindestens ein Führungswagen angeordnet, der über das korrespondierende axiale Ende der Führungsschiene hinaus in translatorische Richtung verfahren werden kann.

Die Linearführung ist bevorzugt so ausgebildet, dass mindestens zwei der Führungswägen stets in Kontakt mit der Führungsschiene bleiben.

Bevorzugt ist ein erstes Anschlagsmittel vorgesehen, um die Verfahrbarkeit des Tischelements relativ zum Trägerelement in die eine translatorische Richtung zu begrenzen, wobei ein zweites Anschlagsmittel vorgesehen ist, um die Verfahrbarkeit des Tischelements relativ zum Trägerelement in die entgegengesetzte translatorische Richtung zu begrenzen.

Die Profilschienenführung ist bevorzugt als Wälzlagerung ausgebildet. Im Führungswagen ist hierbei bevorzugt ein Kugel- oder Rollenumlauf angeordnet.

Die Führungsschiene kann auf dem Trägerelement festgeschraubt sein; jeder Führungswagen kann mit dem Tischelement verschraubt sein.

Bevorzugt sind alle Führungswägen baugleich ausgebildet.

Demgemäß sieht die Erfindung also vor, dass zumindest einer der Führungswägen der Lageranordnung als "überlaufender" Führungswagen ausgebildet ist, d. h. als Wagen, der von seiner Führungsschiene beim translatorischen Verschieben herunterfahren kann und in dieser Situation kontaktfrei mit der Führungsschiene ist. Erst bei einer Rückverschiebung gelangt besagter Führungswagen wieder in den Eingriff mit der Führungsschiene und kann dann wieder Kräfte übertragen.

Bei der erfindungsgemäßen Verwendung von "überlaufenden Führungswägen" ist also vorteilhaft bei Beibehaltung der Länge der Führungsschiene ein deutlich größerer Hub realisierbar.

Der Einsatz von "überlaufenden Wägen" ermöglicht also bei Beibehaltung der Schienenlänge mehr tragende Wägen.

Vorteilhaft können weitgehend standardisierte Komponenten eingesetzt werden, was Kosten minimiert. Besagte Bauteile werden in großer Stückzahl produziert, so dass sie entsprechend kostengünstig verfügbar sind.

Der benötigte bzw. zur Verfügung stehende Bauraum wird so bestmöglich ausgenutzt und eine hohe Tragfähigkeit der Lageranordnung erreicht.

Auch die Montage der Lageranordnung ist relativ problemlos und schnell durchführbar, so dass sie kostengünstig ist. Die Anforderungen an die Qualität der Kundenschnittstelle sind entsprechend niedrig.

In der Zeichnung sind Ausführungsbeispiele der Erfindung dargestellt. Es zeigen:
- Fig. 1: in perspektivischer Darstellung eine Linearführung, mit der ein Tischelement relativ zu einem Trägerelement translatorisch verschieblich gelagert wird gemäß dem Stand der Technik,
- Fig. 2: eine Seitenansicht einer Linearführung analog zu Fig. 1 gemäß einer Ausführungsform der Erfindung, wobei das Tischelement relativ zum Trägerelement eine mittlere Stellung einnimmt,
- Fig. 3: eine Seitenansicht der Linearführung gemäß Fig. 2, wobei das Tischelement relativ zum Trägerelement eine linke Endposition einnimmt,
- Fig. 4: eine Seitenansicht der Linearführung gemäß Fig. 2, wobei das Tischelement relativ zum Trägerelement eine rechte Endposition einnimmt, und
- Fig. 5: eine Vorderansicht einer Linearführung (gesehen in Richtung der translatorischen Verschieberichtung) analog zu Fig. 2, wobei Anschlagsmittel bzw. Wegbegrenzungsmittel skizziert sind.

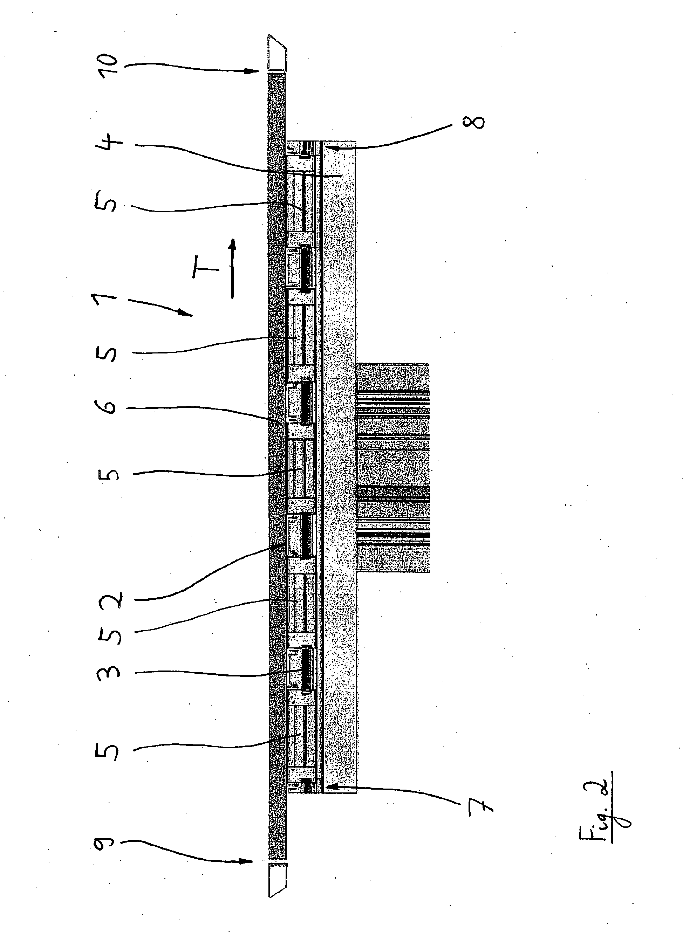

In den Figuren 2, 3 und 4 ist eine erfindungsgemäße Linearführung 1 dargestellt. Diese weist mindestens eine Profilschienenführung 2 auf, die eine Führungsschiene 3 und mehrere Führungswägen 5 umfasst. Konkret sind fünf Führungswägen 5 auf der Führungsschiene 3 angeordnet. Die Führungsschiene 3 ist auf einem Trägerelement 4 festgeschraubt. Alle fünf Führungswägen 5 sind mit einem Tischelement 6 verschraubt, so dass das Tischelement 6 relativ zu dem ortsfesten Trägerelement 4 in translatorische Richtung T verschoben werden kann.

In Fig. 2 befindet sich das Tischelement 6 relativ zum Trägerelement 4 in einer mittleren Lage. Demgemäß befinden sich alle fünf Führungswägen 5 auf der Führungsschiene 3. Die axialen Enden 7 und 8 der Führungsschiene 3 werden jeweils von den axialen Endbereichen 9 und 10 des Tischelements 6 überragt.

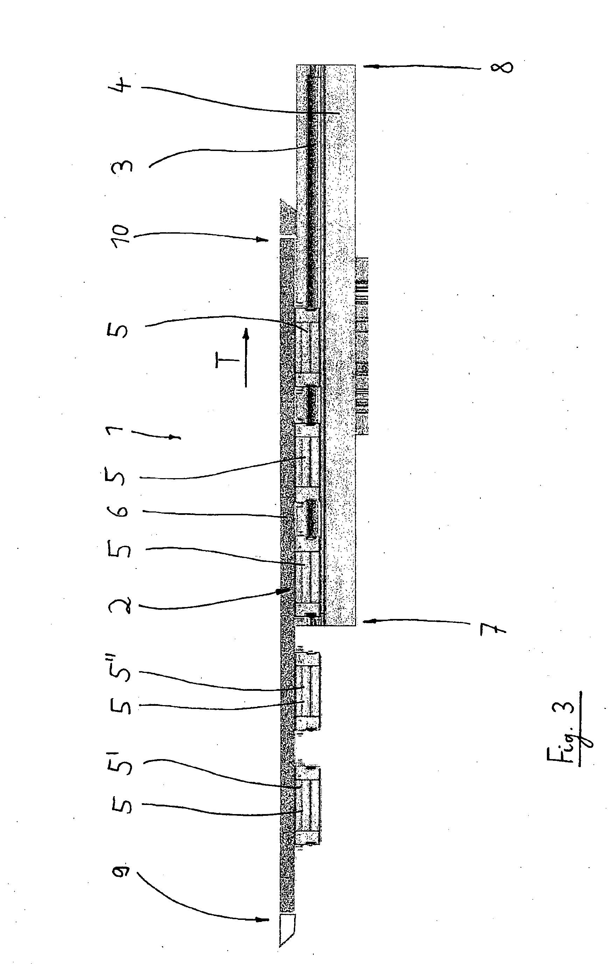

Erfolgt eine Verschiebung des Tischelements 6 nach links, ist nicht vorgesehen, dass - wie im Stand der Technik - die Bewegung blockiert wird, sobald der linke Führungswagen 5' das axiale Ende 7 der Führungsschiene 3 erreicht hat. Vielmehr kann das Tischelement 6 weiter nach links verfahren werden, so dass der linke Führungswagen 5' und - bei entsprechender weiterer Verschiebung - auch noch der von links gesehen zweite Führungswagen 5" von der Führungsschiene 3 herunterläuft. Besagte zwei Führungswägen 5' und 5'' gelangen also außer Eingriff mit der Führungsschiene 3, was zwar die Tragfähigkeit der Linearführung 1 in dieser Arbeitsstellung herabsetzt, aber einen wesentlich größeren Hub erlaubt. In Fig. 3 ist die maximale Verschiebung des Tischelements 6 in translatorische Richtung T nach links skizziert. Erst in dieser Position werden Anschlagsmittel bzw. Wegbegrenzungsmittel aktiv, so dass eine weitere Verschiebung des Tischelements 6 nach links verhindert wird.

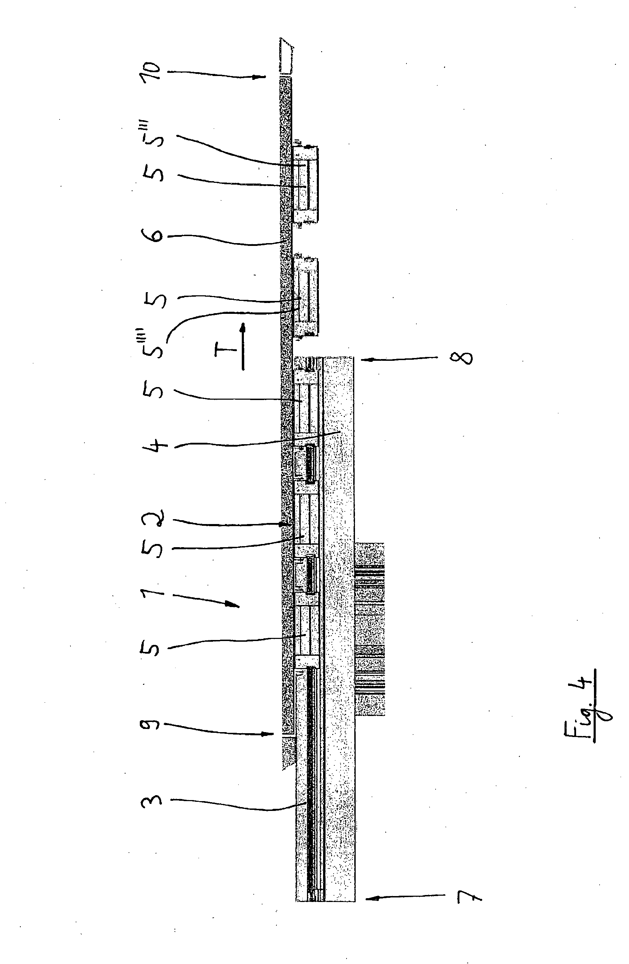

In Fig. 4 ist die entsprechende Situation dargestellt, wenn das Tischelement 6 nach rechts maximal verschoben wird. Erfolgt nämlich eine Verschiebung des Tischelements 6 nach rechts, ist wiederum nicht vorgesehen, dass die Bewegung blockiert wird, sobald der rechte Führungswagen 5''' das axiale Ende 8 der Führungsschiene 3 erreicht hat. Vielmehr kann das Tischelement 6 weiter nach rechts verfahren werden, so dass der rechte Führungswagen 5''' und - bei entsprechender weiterer Verschiebung - auch noch der von rechts gesehen zweite Führungswagen 5'''' von der Führungsschiene 3 herunterläuft. Die beiden Führungswägen 5''' und 5'''' gelangen also außer Eingriff mit der Führungsschiene 3, was wiederum die Tragfähigkeit der Linearführung 1 in dieser Arbeitsstellung herabsetzt, aber einen wesentlich größeren Hub nach rechts erlaubt. Erst in der in Fig. 4 skizzierten maximalen Verschiebeposition werden Anschlagsmittel bzw. Wegbegrenzungsmittel aktiv, so dass eine weitere Verschiebung des Tischelements 6 nach rechts verhindert wird.

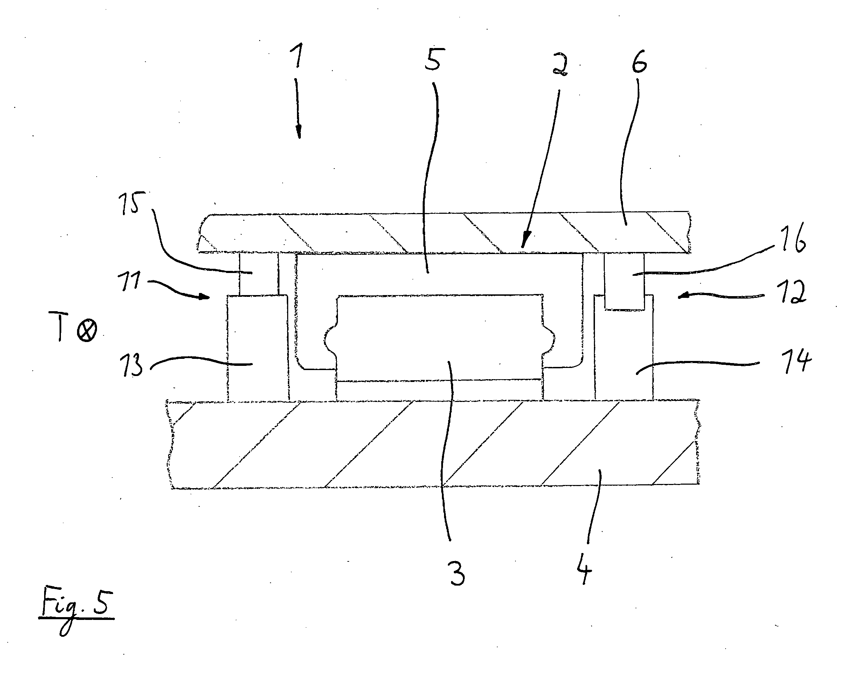

Betreffend die Anschlagsmittel bzw. Wegbegrenzungsmittel ist in Fig. 5 eine mögliche Ausgestaltung skizziert. Die Anschlagsmittel 11 dienen zur Wegbegrenzung der Verschiebung nach der einen Richtung, die Anschlagsmittel 12 dienen zur Wegbegrenzung in die dieser Richtung entgegengesetzten Richtung.

Die Anschlagsmittel 11, 12 umfassen jeweils einen Balken 13 bzw. 14, der am Trägerelement 4 befestigt (festgeschraubt) ist. Dann ist jeweils ein Gegenbalken 15 bzw. 16 vorhanden, der am Tischelement 6 befestigt ist. Der Gegenbalken 15 bzw. 16 ragt dabei vom Tischelement 6 so weit in Richtung Trägerelement 4 vor, dass es bei entsprechender Verschiebung des Tischelement 6 relativ zum Trägerelement 4 zum Anschlag kommt, wenn die entsprechend gewünschte Maximalverschiebung erreicht ist, d. h. der Gegenbalken 15 bzw. 16 schlägt mit seiner Stirnseite an der Stirnseite des Balkens 13 bzw. 14 an.

Natürlich sind auch andere maschinenbautechnische Möglichkeiten gegeben, um die Wegbegrenzungsmittel 11, 12 zu realisieren.

### Bezugszeichenliste

- 1: Linearführung (Linearlageranordnung)
- 2: Profilschienenführung
- 3: Führungsschiene
- 4: Trägerelement
- 5: Führungswagen
- 6: Tischelement
- 7: axiales Ende der Führungsschiene
- 8: axiales Ende der Führungsschiene
- 9: axialer Endbereich des Tischelements
- 10: axialer Endbereich des Tischelements
- 11: erstes Anschlagsmittel (Wegbegrenzungsmittel)
- 12: zweites Anschlagsmittel (Wegbegrenzungsmittel)
- 13: Balken
- 14: Balken
- 15: Gegenbalken
- 16: Gegenbalken

- T: translatorische Richtung

## Patentansprüche

1. Linearführung (1), umfassend mindestens eine Profilschienenführung (2), wobei die Profilschienenführung (2) eine Führungsschiene (3) aufweist, die auf einem Trägerelement (4) befestigt ist, und wobei die Profilschienenführung (2) Führungswägen (5) aufweist, die mit einem in eine translatorische Richtung (T) relativ zum Trägerelement (4) verschiebbaren Tischelement (6) verbunden sind, wobei der mindestens einen Profilschienenführung (2) mindestens drei Führungswägen (5) zugeordnet sind, wobei die Linearführung (1) so ausgebildet ist, dass mindestens einer der Führungswägen (5) über ein axiales Ende (7, 8) der Führungsschiene (3) hinaus in translatorische Richtung (T) verfahren werden kann,
**dadurch gekennzeichnet,**
**dass** Anschlagsmittel (11, 12) an dem Tischelement (6) oder an mindestens einem der Führungswägen (5) und/oder am Trägerelement (4) angeordnet sind, die die Verschiebung des Tischelements (6) relativ zum Trägerelement (4) in translatorische Richtung (T) begrenzen, wobei die Anschlagsmittel (11, 12) so angeordnet und/oder ausgebildet sind, dass sie für mindestens einen der Führungswägen (5) bezüglich der Führungsschiene (3) keine Begrenzung der Verfahrbarkeit in translatorische Richtung (T) darstellen.

2. Linearführung nach Anspruch 1, **dadurch gekennzeichnet, dass** in beiden axialen Endbereichen (9, 10) des Tischelements (6) je mindestens ein Führungswagen (5) angeordnet ist, der über das korrespondierende axiale Ende (7, 8) der Führungsschiene (3) hinaus in translatorische Richtung (T) verfahren werden kann.

3. Linearführung nach Anspruch 1 oder 2, **dadurch gekennzeichnet, dass** die Linearführung (1) so ausgebildet ist, dass mindestens zwei der Führungswägen (5) stets in Kontakt mit der Führungsschiene (3) bleiben.

4. Linearführung nach einem der Ansprüche 1 bis 3, **dadurch gekennzeichnet, dass** ein erstes Anschlagsmittel (11) vorgesehen ist, um die Verfahrbarkeit des Tischelements (6) relativ zum Trägerelement (4) in die eine translatorische Richtung (T) zu begrenzen, und dass ein zweites Anschlagsmittel (12) vorgesehen ist, um die Verfahrbarkeit des Tischelements (6) relativ zum Trägerelement (4) in die entgegengesetzte translatorische Richtung (T) zu begrenzen.

5. Linearführung nach einem der Ansprüche 1 bis 4, **dadurch gekennzeichnet, dass** die Profilschienenführung (2) als Wälzlagerung ausgebildet ist.

6. Linearführung nach Anspruch 5, **dadurch gekennzeichnet, dass** im Führungswagen (5) ein Kugel- oder Rollenumlauf angeordnet ist.

7. Linearführung nach einem der Ansprüche 1 bis 6, **dadurch gekennzeichnet, dass** die Führungsschiene (3) auf dem Trägerelement (4) festgeschraubt ist und dass jeder Führungswagen (5) mit dem Tischelement (6) verschraubt ist.

8. Linearführung nach einem der Ansprüche 1 bis 7, **dadurch gekennzeichnet, dass** alle Führungswägen (5) baugleich ausgebildet sind.

## Claims

1. Linear guide (1), comprising at least one profiled rail guide (2), the profiled rail guide (2) having a guide rail (3) which is fastened on a carrier element (4), and the profiled rail guide (2) having guide carriages (5) which are connected to a table element (6) which can be displaced in a translational direction (T) relative to the carrier element (4), the at least one profiled rail guide (2) being assigned at least three guide carriages (5), the linear guide (1) being configured in such a way that at least one of the guide carriages (5) can be moved in the translational direction (T) beyond an axial end (7, 8) of the guide rail (3), **characterized in that** stop means (11, 12) are arranged on the table element (6) or on at least one of the guide carriages (5) and/or on the carrier element (4), which stop means (11, 12) limit the displacement of the table element (6) in the translational direction (T) relative to the carrier element (4), the stop means (11, 12) being arranged and/or configured in such a way that they do not provide a limiting action of the movability in the translational direction (T) for at least one of the guide carriages (5) with regard to the guide rail (3).

2. Linear guide according to Claim 1, **characterized in that** in each case at least one guide carriage (5) is arranged in both axial end regions (9, 10) of the table element (6), which guide carriage (5) can be moved in the translational direction (T) beyond the corresponding axial end (7, 8) of the guide rail (3).

3. Linear guide according to Claim 1 or 2, **characterized in that** the linear guide (1) is configured in such a way that at least two of the guide carriages (5) remain in contact with the guide rail (3) at all times.

4. Linear guide according to one of Claims 1 to 3, **characterized in that** a first stop means (11) is provided, in order to limit the movability of the table element (6) relative to the carrier element (4) in the one translational direction (T), and **in that** a second stop means (12) is provided, in order to limit the movability of the table element (6) relative to the carrier element (4) in the opposite translational direction (T).

5. Linear guide according to one of Claims 1 to 4, **characterized in that** the profiled rail guide (2) is configured as an anti-friction bearing.

6. Linear guide according to Claim 5, **characterized in that** a recirculating ball or roller means is arranged in the guide carriage (5).

7. Linear guide according to one of Claims 1 to 6, **characterized in that** the guide rail (3) is screwed fixedly on the carrier element (4), and **in that** each guide carriage (5) is screwed to the table element (6).

8. Linear guide according to one of Claims 1 to 7, **characterized in that** all the guide carriages (5) are of structurally identical configuration.

## Revendications

1. Guidage linéaire (1), comprenant au moins un guidage sur rail profilé (2), dans lequel le guidage sur rail profilé (2) présente un rail de guidage (3), qui est fixé sur un élément de support (4), et dans lequel le guidage sur rail profilé (2) présente des chariots de guidage (5), qui sont reliés à un élément de table (6) déplaçable dans une direction de translation (T) par rapport à l'élément de support (4), dans lequel au moins trois chariots de guidage (5) sont associés audit au moins un guidage sur rail profilé (2), dans lequel le guidage linéaire (1) est configuré de telle manière qu'au moins un des chariots de guidage (5) puisse se déplacer au-delà d'une extrémité axiale (7, 8) du rail de guidage (3) dans la direction de translation (T), **caractérisé en ce que** des moyens de butée (11, 12) sont disposés sur l'élément de table (6) ou sur au moins un des chariots de guidage (5) et/ou sur l'élément de support (4), qui limitent le déplacement de l'élément de table (6) par rapport à l'élément de support (4) dans la direction de translation (T), dans lequel les moyens de butée (11, 12) sont disposés et/ou configurés de telle manière qu'ils ne représentent, pour au moins un des chariots de guidage (5), par rapport au rail de guidage (3) aucune limitation de la mobilité dans la direction de translation (T).

2. Guidage linéaire selon la revendication 1, **caractérisé en ce qu'**au moins un chariot de guidage (5) est disposé dans chacune des deux régions d'extrémité axiales (9, 10) de l'élément de table (6), qui peut être déplacé dans la direction de translation (T) au-delà de l'extrémité axiale correspondante (7, 8) du rail de guidage (3).

3. Guidage linéaire selon la revendication 1 ou 2, **caractérisé en ce que** le guidage linéaire (1) est configuré de telle manière qu'au moins deux chariots de guidage (5) restent toujours en contact avec le rail de guidage (3).

4. Guidage linéaire selon l'une quelconque des revendications 1 à 3, **caractérisé en ce qu'**il est prévu un premier moyen de butée (11), afin de limiter la mobilité de l'élément de table (6) par rapport à l'élément de support (4) dans la première direction de translation (T), et **en ce qu'**il est prévu un deuxième moyen de butée (12), pour limiter la mobilité de l'élément de table (6) par rapport à l'élément de support (4) dans la direction de translation opposée (T).

5. Guidage linéaire selon l'une quelconque des revendications 1 à 4, **caractérisé en ce que** le guidage sur rail profilé (2) est configuré comme appui à roulement.

6. Guidage linéaire selon la revendication 5, **caractérisé en ce qu'**un chemin de roulement de billes ou de rouleaux est disposé dans le chariot de guidage (5).

7. Guidage linéaire selon l'une quelconque des revendications 1 à 6, **caractérisé en ce que** le rail de guidage (3) est boulonné sur l'élément de support (4) et **en ce que** chaque chariot de guidage (5) est boulonné à l'élément de table (6).

8. Guidage linéaire selon l'une quelconque des revendications 1 à 7, **caractérisé en ce que** tous les chariots de guidage (5) sont de construction identique.
